# EUROPEAN PATENT APPLICATION

(11) **EP 4 242 173 A1**
(43) Date of publication of application: **13.09.2023**
(21) Application number: 22305276.2
(22) Date of filing: 11.03.2022
(51) Int. Cl.: C01B 21/093

(54) **PURIFICATION OF HYDROGEN BIS(FLUOROSULFONYL)IMIDE**

(71) Applicant: SPECIALTY OPERATIONS FRANCE, 69003 Lyon (FR)
(72) Inventor: REVELANT, Denis, 69740 GENAS (FR)
(74) Representative: Viola, Laura Maria

(57) **Abstract**

The invention relates to a method for purifying bis(fluorosulfonyl)imide.

## Description

### Technical Field

The invention relates to a method for purifying hydrogen bis(fluorosulfonyl)imide.

### Background Art

It is known that bis(fluorosulfonyl)imide salt is a useful anion source for ion electrical conducting material. Methods for the manufacture of such a material have been proposed in the art since long. However, some of these methods proceed via the formation of strong acids - which are difficult to handle and cause corrosion problems in the reaction apparatus. Typically, the synthesis of bis(fluorosulfonyl)imide (hereinafter referred to as "HFSI") starts with obtaining or synthesising a "crude" bis(fluorosulfonyl)imide because the HFSI in the reaction product is contaminated with various undesired compounds, such as fluorosulfonic acid (FSO₃H), hydrochloric acid (HCl), hydrogen fluoride (HF), and sulfuric acid (H₂SO₄), that are byproducts of the corresponding reaction.

For example, US 2012/0014859 (MITSUBISHI MATERIAL CORPORATION**)** disclosed a method for producing bis(fluorosulfonyl)imide salt comprising a step of dissolving, in which a mixed liquid containing bis(fluorosulfonyl)imide and fluorosulfonic acid is dissolved in water to prepare an aqueous solution; a step of neutralising, in which the aqueous solution is neutralised by an alkali compound to prepare a neutralised solution; and a step of recovery bis(fluorosulfonyl)imide salt, in which the bis(fluorosulfonyl)imide is recovered from the neutralised solution, preferably with an organic solvent.

More recently, US 2019/0233368 (NIPPON SODA CO., LTD**.)** discloses a method for producing a fluorine-containing sulfonyl amide compound comprising a step of washing a fluorine-containing sulfonyl amide compound with the use of an aqueous solution of salt of sulfuric acid. The method can comprise a step of neutralisation before the step of washing.

US 2020/0331754 (HONEYWELL INTERNATIONAL INC**.)** discloses a method for producing purified bis(fluorosulfonyl)imide providing a liquid mixture including bis(fluorosulfonyl)imide and fluorosulfonic acid and then contacting the liquid mixture with gaseous ammonia, thus producing ammonium fluorosulfate, and separating the liquid mixture from the ammonium fluorosulfate.

US 10,734,664 (SES Holdings Pte. Ltd**.)** discloses a method of removing one or more target impurities from crude hydrogen bis(fluorosulfonyl)imide using a crystallisation technique.

EP 3466871 (Nippon Shokubai Co., Ltd.**)** discloses a method for producing bis(fluorosulfonyl)imide alkali metal salt having reduced solvent content. On the one hand, the description provides for the possibility of using a solvent in the reaction and all the examples herein disclosed require the use of LiF, with the consequent production of hydrogen fluoride during the reaction.

### Summary of invention

The Applicant perceived that there is still the need for providing a method for the manufacture of hydrogen bis(fluorosulfonyl)imide (HFSI) that avoids the generation of both strong acids which are difficult to handle and by-products (such halogenated products, like notably HF) that would negatively affect the downstream process and hence the purity of the final LiFSI.

The Applicant also perceived that there is still the need for a method for the manufacture of HFSI that allows to obtain a final content of undesired compounds below 100 pm and a chemical purity equal to or higher than 99.5 %, such that it can be promptly used in the downstream process without the need for further purification steps.

Facing such technical problems, the Applicant surprisingly developed a process for the manufacture of bis(fluorosulfonyl)imide that is easy to scale up to an industrial plant and can be run both in batch or continuously.

Thus, in a first embodiment, the present invention relates to a process for the manufacture of hydrogen bis(fluorosulfonyl)imide (HFSI) comprising:
(a) providing a first mixture [mixture (M1)] comprising HFSI and at least one acid compound;
(b) contacting said mixture (M1) withat least one Bronsted base;
(c) said mixture (M1) and said at least one Bronsted base to react;
(d) separating the reaction products between said at least one Bronsted base and said at least one acid compound, so as to provide HFSI or a mixture [mixture (M2)] comprising HFSI and at least one non-reacted compound.

According to a preferred embodiment, said steps (c) and (d) are performed simultaneously.

Advantageously, the process of the present invention is performed with no use of solvent, preferably with no use of organic solvent(s). This is advantageous from many perspectives, as it allows for a more environmentally-friendly process, which is also cost effective and easy-to-handle.

In a second embodiment, the present invention relates to a bis(fluorosulfonyl)imide (HFSI) obtainable from the process according to the present invention, said HFSI being characterised by a purity of at least 99.5 mol.% with respect to the total number of moles of HFSI, as determined by ¹⁹F- NMR in neat conditions.

In a third embodiment, the present invention relates to a mixture [mixture (M2)] obtainable from the process according to the present invention, said mixture (M2) comprising at least 99.5 mol% of HFSI with respect to the total number of moles in said mixture (M2) as determined by ¹⁹F-NMR in neat conditions; and less than 100 ppm of acid compounds, preferably less than 100 ppm of LiFSO₃.

In a further embodiment, the present invention relates to the use of HFSI as obtained by the process of the present invention as intermediate compound in the manufacture of lithium bis(fluorosulfonyl)imide (LiFSI).

In a still another embodiment, the present invention relates to a process for the manufacture of lithium bis(fluorosulfonyl)imide (LiFSI), said process comprising contacting said HFSI as obtained according to the process of the present invention and at least one lithiation agent.

### Description of embodiments

In the present application :
- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

Advantageously, in the process of the present invention, mixture (M1) is provided in liquid form.

Preferably, mixture (M1) comprises HFSI and at least one acidic compound, said acid compoundbeing more preferably fluorosulfonic acid.

Preferably, after said step (a) and before said step (b), a step of filtration to separate solid contaminants from mixture (M1) can be performed.

In the process according to the present invention, the HFSI in said mixture (M1) has a purity of less than 99.5 mol.% with respect to the total number of moles of HFSI, as determined by ¹⁹F- NMR in neat conditions.

Preferably, said Bronsted base is selected in the group comprising, more preferably consisting of: hydroxide, carbonate and bicarbonate with alkaline metals (preferably Na, K and Li) or ammonium cation. While other Bronsted bases can be used in the process of the present invention, it is nonetheless preferred that the process is performed in the absence of halogenated reactants, such as chlorinated and fluorinated reactants like NaF, KF, NaCl.

More preferably, said Bronsted base is selected in the group comprising:

LiOH.H₂O, Li₂CO₃, NH₄OH.

Preferably, each of said steps (b) and (c) is performed at a temperature from 0°C to 100°C, more preferably from 5°C to 60°C and even more preferably from 10°C to 30°C.

Step (b) and step (c) can be performed at the same temperature or at different temperatures.

Advantageously, step (b) and step (c) can be performed either maintaining the same temperature throughout the reaction or raising/decreasing the temperature throughout the reaction.

Advantageously, said step (b) is performed at a temperature between 10°C and 30°C.

Advantageously, said step (c) is performed starting at a temperature between 10°C and 30°C as set during step (b) and raising the temperature for example between 30°C and 60°C.

Preferably, each of said step (b) and/or (c) is performed at a pressure from 10 Pa to 100000 Pa, more preferably from 1000 Pa to 100000 Pa.

Step (b) and step (c) can be performed at the pressure or at different pressures.

Advantageously, step (b) and step (c) can be performed either maintaining the same pressure throughout the reaction or raising/decreasing the pressure throughout the reaction.

Advantageously, said step (b) is performed at atmospheric pressure.

Advantageously, said step (c) is performed starting at atmospheric pressure as set during step (b) and decreasing the pressure, for example between 15000 Pa and 1000 Pa.

According to a preferred embodiment, during said step (b) and/or step (c), at least one dehydrating agent [agent (A)] is added to the reaction environment comprising mixture (M1) and said at least one Bronsted base.

Preferably, said agent (A) is selected in the group comprising, more preferably consisting of: oleum (SO₃/H₂SO₄); trimethyl orthoformate (TMOF), triethyl orthoformate, tri-n-propyl orthoformate, tri-iso-propyl orthoformate, tri-n-butyl orthoformate, 2-methoxy-1,3-dioxolane, 2-ethoxy-1,3-dioxolane, dimethoxy(ethoxy)ethane, diethoxy(methoxy)ethane, trimethyl orthoacetate, triethyl orthoacetate, tri-n-propyl orthoacetate, tri-iso-propyl orthoacetate, tri-n-butyl orthoacetate, trimethyl orthopropionate, triethyl orthopropionate, tri-n-propyl orthopropionate, tri-iso-propyl orthopropionate, tri-n-butyl orthopropionate, trimethyl orthobutyrate, triethyl orthobutyrate, tri-n-propyl orthobutyrate, tri-iso-propyl orthobutyrate, tri-n-butyl orthobutyrate, trimethyl orthopentanoate, triethyl orthopentanoate, tri-n-propyl orthopentanoate, tri-iso-propyl orthopentanoate, tri-n-butyl orthopentanoate and mixtures thereof; concentrated phosphoric acid, Al₂O₃, zeolites and mixtures thereof.

Preferably, the presence of said agent (A) in said step (b) and/or step (c) allows to obtain a water content of less than 1000 ppm, more preferably less then 800 ppm, as determined by determined by gas chromatography (GC) or by headspace sad chromatography.

Preferably, said step (d) is performed by precipitating and/or distillating the reaction products between said at least one Bronsted base and said at least one acid compound.

Advantageously, at the end of step (d), said reaction product between said at least one Bronsted base and said at least one acid compound is obtained as a solid, at the bottom of the distillation column.

According to a preferred embodiment, the reaction product between said at least one Bronsted base and said at least one acid compound is LiFSO₃.

Advantageously, after said step (d), said separated HFSI or said mixture (M2) is characterised by a content of separated HFSI of at least 99.5 mol.%, more preferably higher than 99.5 mol% and even more preferably higher than 99.8 mol%, with respect to the total number of moles of HFSI, as determined by ¹⁹F-NMR and ion-chromatography.

Advantageously, after said step (d), said separated HFSI or said mixture (M2) is characterised by containing less than 100 ppm of acid compounds, preferably less than 100 ppm of LiFSO₃, as determined by ¹⁹F- NMR and ion-chromatography.

As will be understood by those skilled in the art, the process according to the present invention comprising steps (a) to (d) and any additional step as described herein, can be performed either in batch or continuously.

Preferably, said at least one lithiation agent is a component, which does not generate water or soluble species over the course of the reaction.

In some preferred embodiments, said lithiation agent is selected from the group consisting of lithium chloride (LiCl), lithium fluoride (LiF), lithium carbonate (Li₂CO₃), lithium sulphate (Li₂SO₄), lithium carboxylate (Liₙ(RCO₂)ₙ), Li₂SiO₃, Li₂B₄O₇ and mixtures thereof.

The invention will be now described with reference to the following examples, whose purpose is merely illustrative and not intended to limit the scope of the invention.

### Experimental Section

### Example 1

A 500 mL PTFE round-bottom flask equipped with a PTFE distillation column, a PTFE condenser, a PTFE stirring bar, a Heat-On block and a vacuum pump was placed inside a glovebox with H₂O and O₂ concentrations below 1 ppm. 50,29 g crude HFSI supplied from PROVISCO CS containing 280 ppm FSO₃H was loaded inside the vessel and the magnetic stirring was started at 500 rpm. 115 mg LiOH.H₂O supplied from MERCK was added inside the reaction mixture before sealing the reactor.

The condenser setpoint was then fixed at 1°C, the pressure lowered between 0.15 and 1 mbar and the reaction mixture heated to 50°C. When the vapour temperature reached 40°C at the column top, distillates were collected and two fractions recovered:
- Fraction A 8.04 g
- Fraction B 20.29 g

The neat fraction B was analysed by 19F NMR and the signal of FS03H could not be detected anymore.

### Example 2

In a 300 ml tank reactor equipped with a distillation column, a condenser and a vacuum pump, 1 mol (181 g) of crude HFSI containing 0.1 mol of FSO₃H was loaded and steered at 20°C. Then, 0.11 mol of trimethyl orthoformate (TMOF) were added and steered for 10 minutes. Then, 0.055 mol of Li₂CO₃ were added and steered at 20°C for 30 minutes. The equipment was then put under vacuum at 100 mbar and the temperature was progressively raised to 50°C. A cut of 10 g overhead was withdrawn and 165 g of purified HFSI (0.91 mole) were collected in a pure product receiver. The remaining bottom content, approximately 6 g, was recovered at room temperature and sent to waste disposal.

## Claims

1. A process for the manufacture of hydrogen bis(fluorosulfonyl)imide (HFSI) comprising:
(a) providing a first mixture [mixture (M1)] comprising HFSI and at least one acid compound;
(b) contacting said mixture (M1) and at least one Bronsted base;
(c) letting said mixture (M1) and said at least one Bronsted base to react;
(d) separating the reaction products between said at least one Bronsted base and said at least one acid compound, so as to provide HFSI or a mixture [mixture (M2)] comprising HFSI and at least one non-reacted compound.

2. The process according to Claim 1, wherein said steps (c) and (d) are performed simultaneously.

3. The process according to Claim 1 or 2, wherein steps (a) to (d) are performed
- with no use of solvent and/or
- in the absence of halogenated reactants, such as chlorinated and fluorinated reactants like NaF, KF, NaCl.

4. The process according to anyone of the preceding Claims, wherein said mixture (M1) is in liquid form.

5. The process according to anyone of the preceding Claims, wherein in step (a) said at least one acid compound is fluorosulfonic acid.

6. The process according to anyone of the preceding Claims, wherein after said step (a) and before said step (b), a step of filtration to separate solid contaminants from mixture (M1) is performed.

7. The process according to anyone of the preceding Claims, wherein said Bronsted base is selected in the group comprising, more preferably consisting of: hydroxide, carbonate and bicarbonate with alkaline metals (preferably Na, K and Li) or ammonium cation.

8. The process according to anyone of the preceding Claims, wherein:
- each of said steps (b) and (c) is performed at a temperature from 0°C to 100°C; and/or
- said step (b) is performed at a temperature between 10°C and 30°C; and/or
- said step (c) is performed starting at a temperature between 10°C and 30°C as set during step (b) and raising the temperature between 30°C and 60°C.

9. The process according to anyone of the preceding Claims, wherein:
- each of said step (b) and/or (c) is performed at a pressure from 10 Pa to 100000 Pa; and/or
- said step (b) is performed at atmospheric pressure; and/or
- said step (c) is performed starting at atmospheric pressure as set during step (b) and decreasing the pressure between 15000 Pa and 1000 Pa.

10. The process according to anyone of the preceding Claims, wherein during said step (b) and/or step (c), at least one dehydrating agent [agent (A)] is added to the reaction environment comprising mixture (M1) and said at least one Bronsted base.

11. The process according to Claim 10, wherein said agent (A) is selected in the group comprising, more preferably consisting of: oleum (SO3/H2SO4); trimethyl orthoformate (TMOF), triethyl orthoformate, tri-n-propyl orthoformate, tri-iso-propyl orthoformate, tri-n-butyl orthoformate, 2-methoxy-1,3-dioxolane, 2-ethoxy-1,3-dioxolane, dimethoxy(ethoxy) ethane, diethoxy(methoxy)ethane, trimethyl orthoacetate, triethyl ortho- acetate, tri-n-propyl orthoacetate, tri-iso-propyl orthoacetate, tri-n-butyl orthoacetate, trimethyl orthopropionate, triethyl orthopropionate, tri-n-propyl orthopropionate, tri-iso-propyl orthopropionate, tri-n-butyl orthopropionate, trimethyl orthobutyrate, triethyl orthobutyrate, tri-n-propyl orthobutyrate, tri-iso-propyl orthobutyrate, tri-n-butyl orthobutyrate, trimethyl orthopenta- noate, triethyl orthopentanoate, tri-n-propyl orthopentanoate, tri-iso-propyl orthopentanoate, tri-n-butyl orthopentanoate and mixtures thereof; concentrated phosphoric acid, A1203, zeolites and mixtures thereof.

12. The process according to anyone of the preceding Claims, wherein said step (d) is performed by precipitating and/or distillating the reaction products between said at least one Bronsted base and said at least one acid compound.

13. A bis(fluorosulfonyl)imide (HFSI) obtainable from the process according to anyone of Claims 1 to 12, said HFSI being **characterised by**
- a purity of at least 99.5 mol.% with respect to the total number of moles of HFSI, as determined by ¹⁹F- NMR in neat conditions; and/or
- less than 100 ppm of acid compounds, preferably less than 100 ppm of LiFSO₃.

14. A mixture [mixture (M2)] obtainable from the process according to anyone of Claims 1 to 12, said mixture (M2) comprising at least 99.5 mol.% of HFSI with respect to the total number of moles in mixture (M2) as determined by ¹⁹F- NMR in neat conditions; and less than 100 ppm of acid compounds, preferably less than 100 ppm of LiFSO₃

15. Use of bis(fluorosulfonyl)imide (HFSI) obtained from the process according to anyone of Claims 1 to 12, as intermediate compound in the manufacture of lithium bis(fluorosulfonyl)imide (LiFSI).

16. A process for the manufacture of lithium bis(fluorosulfonyl)imide (LiFSI), said process comprising contacting said bis(fluorosulfonyl)imide (HFSI) as obtained according to the process of Claims 1 to 12 and at least one lithiation agent.
